# FASCICULE DE BREVET EUROPEEN

(11) **EP 2 488 379 B1**
(45) Date de publication et mention de la délivrance du brevet: **19.03.2014**
(21) Numéro de dépôt: 10769009.1
(22) Date de dépôt: 21.09.2010
(51) Int. Cl.: B60K 1/00, H02K 11/00

(54) **CADRE MOTEUR POUR MOTEUR ELECTRIQUE DE VEHICULE AUTOMOBILE**
MOTORRAHMEN FÜR DEN ELEKTROMOTOR EINES KRAFTFAHRZEUGS
MOTOR FRAME FOR AN ELECTROMOTOR OF A MOTOR VEHICLE

(30) Priorité: 15.10.2009 FR 0957242
(43) Date de publication de la demande: 22.08.2012
(73) Titulaire: Renault S.A.S., 92100 Boulogne-Billancourt (FR)
(72) Inventeur: LAMOINE, Patrick, F-78180 Montigny Le Bretonneux (FR); GROSJEAN, Michael, F-78111 Dammartin-en-serve (FR)
(86) Numéro de dépôt international: PCT/FR2010/051965
(87) Numéro de publication internationale: WO 2011/045497

(56) Documents cités:
- EP-A2- 1 447 254
- FR-A1- 2 928 877
- JP-A- 8 310 252
- US-A1- 2008 078 603

## Description

L'invention concerne de manière générale les moteurs électriques de véhicule automobile, et se rapporte plus particulièrement au montage du moteur électrique dans le compartiment moteur du véhicule automobile.

Dans un véhicule électrique, le moteur électrique comprend généralement une machine électrique, un bloc d'électronique de puissance et un bloc chargeur. Ces trois éléments ne se fixent pas les uns les autres afin de former un ensemble comme c'est le cas pour les véhicules thermiques. Relier ces éléments au châssis pose alors un problème. En effet, au montage, ceci implique de prime abord de lier chaque élément au châssis ce qui complexifie les opérations de montage, de démontage et de maintenance.

Le document US2008/078603, qui sert de base à la présentation en deux parties de la revendication 1, propose une structure de montage pour moteur électrique dans un véhicule, fixée au châssis du véhicule par des boulons, et comprenant des moyens de fixation d'un moteur électrique et de modules d'électronique de puissance. Ce document décrit un module de maintien inférieur sur lequel est fixé une machine électrique et un module de maintien supérieur sur lequel est fixé un bloc électronique de puissance et un bloc chargeur. L'ensemble étant ensuite monté à l'intérieur du compartiment moteur.

Le document FR2928877 décrit une structure résistante aux chocs de fixation à l'arrière d'un véhicule, d'un moteur électrique, cette structure étant fixée au châssis du véhicule par plusieurs côtés.

Le document EP1447254 décrit une structure de support dans un compartiment moteur de véhicule à pile à combustible, d'un moteur électrique sur lequel est fixé un dispositif d'alimentation.

Le document JP8310252 décrit une structure de montage pour moteur électrique dans un véhicule, pouvant supporter d'autres éléments tels qu'une unité de contrôle du moteur.

Le but de l'invention est donc de pallier ces inconvénients en proposant un ensemble cadre moteur et moteur électrique sous la forme d'un bloc unique facilitant la manutention et le montage dans le compartiment moteur du véhicule.

Un dispositif selon l'invention est décrit dans la revendication 1.

Selon l'invention, l'organe de montage est divisé en deux parties et comprendre un module de maintien inférieur, tel qu'un cadre inférieur, muni d'un moyen de fixation au châssis, d'un moyen de fixation de la machine électrique et d'un moyen de fixation du bloc électronique de puissance, et un module de maintien supérieur, tel qu'un cadre supérieur, muni d'un moyen de fixation du bloc chargeur et adapté pour se fixer sur le module de maintien inférieur. Le module de maintien inférieur est relié au châssis par des moyens de fixation afin d'autoriser un démontage par le dessus. Le poids du boîtier électronique de puissance est tel qu'il est nécessaire, en effet, de le retirer vers le haut lors du démontage du moteur.

Avantageusement, le module de maintien inférieur comprend deux poutres transversales sur lesquelles deux moyens de fixation permettent de fixer une première poutre du module supérieur sensiblement accolée à une première poutre transversale du module inférieur et une deuxième poutre du module supérieur situé à distance d'une deuxième poutre transversale du module inférieur. Le manque d'espace dans le compartiment moteur conduit à recentrer les poutres latérales du module de maintien supérieur recouvrant ainsi en partie au moins le boîtier électronique de puissance.

Selon l'invention, le module de maintien inférieur comprend des bras de levage disposés de part et d'autre de son centre de gravité. Cette position facilite la manutention de l'ensemble du moteur électrique et son montage ultérieur dans le compartiment moteur d'un véhicule électrique.

Avantageusement, le dispositif comprend des moyens de fixation aptes à fixer les éléments auxiliaires du moteur, tels qu'un compresseur ou une pompe à eau, au module de maintien inférieur. Ainsi, il est possible de démonter les trois éléments du moteur tout en laissant en place les éléments auxiliaires.

Selon un autre aspect, un ensemble de propulsion électrique, destiné à être monté dans le compartiment moteur d'un véhicule électrique comprend une machine électrique, un bloc électronique de puissance et un bloc chargeur dans lequel un organe de montage présente des moyens de fixation sur le châssis du véhicule et des moyens de fixation pour la machine électrique, le bloc électronique de puissance et le bloc chargeur.

Selon l'invention, l'organe de montage comprend un module de maintien inférieur, tel qu'un cadre inférieur, muni d'un moyen de fixation au châssis, un moyen de fixation de la machine électrique et un moyen de fixation du bloc électronique de puissance, et un module de maintien supérieur, tel qu'un cadre supérieur, muni d'un moyen de fixation du bloc chargeur et adapté pour se fixer sur le module de maintien inférieur. Cet ensemble est alors destiné à être monté dans le compartiment moteur d'un véhicule électrique. L'ensemble ainsi formé peut être transporté dans les différentes usines de montage de véhicule.

Selon encore un autre aspect, un procédé de montage d'un ensemble de propulsion électrique dans le compartiment moteur d'un véhicule électrique comprend les étapes suivantes : on fixe une machine électrique sur la partie inférieure d'un module de maintien inférieur ; on fixe un bloc électronique de puissance sur la partie supérieure du module de maintien inférieur ; on fixe un bloc chargeur sur un module de maintien supérieur ; on fixe le module de maintien supérieur sur le module de maintien inférieur. Enfin on loge l'ensemble à l'intérieur du compartiment moteur en fixant avantageusement le module de maintien inférieur au châssis du véhicule. Le démontage est alors réalisé en sens inverse. On commence par retirer le bloc chargeur, puis le module de maintien supérieur, rendant un accès au boîtier électronique de puissance possible, puis la machine électrique.

De préférence, on fixe des éléments auxiliaires du moteur, tels qu'un compresseur ou une pompe à eau, au module de maintien inférieur.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 illustre une vue éclatée d'un dispositif conforme à l'invention ;
- la figure 2 illustre une vue d'ensemble d'un dispositif conforme à l'invention après assemblage ; et
- la figure 3 illustre une vue du dessus d'un dispositif conforme à l'invention en cours d'assemblage.

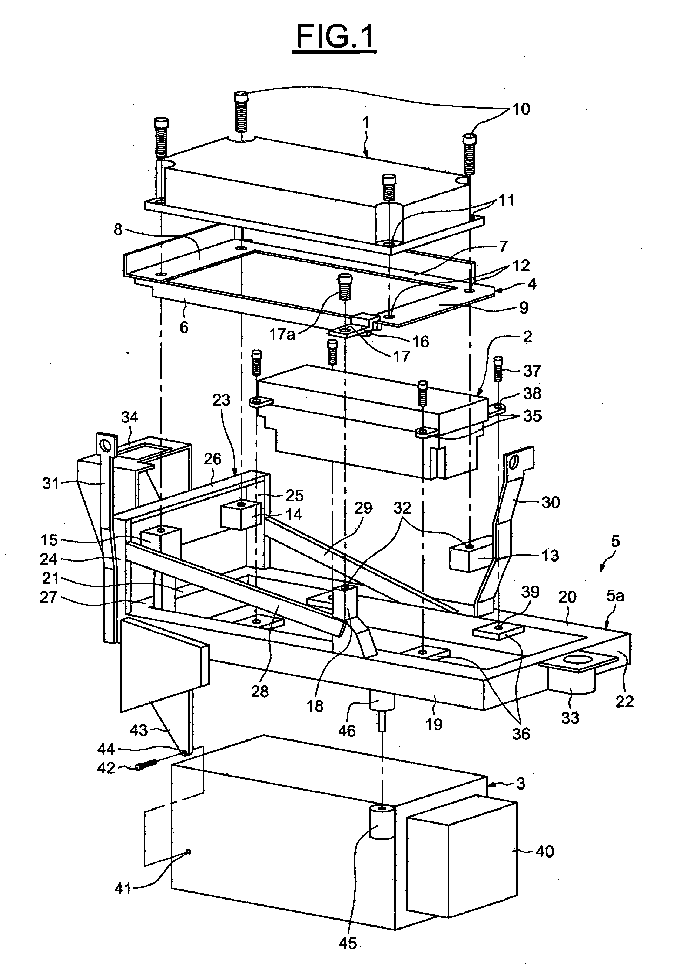

Sur la figure 1, on a représenté un dispositif de montage en vue éclatée pour un ensemble de propulsion électrique conforme à l'invention. L'ensemble de propulsion comporte un bloc chargeur 1, un boîtier électronique de puissance 2, et une machine électrique 3. Ces différents éléments de l'ensemble de propulsion sont fixés sur un dispositif de montage comprenant un organe de montage constitué d'un cadre supérieur 4 et d'un cadre inférieur 5. Le cadre supérieur 4 est dans l'exemple illustré de forme sensiblement rectangulaire. Il comporte deux poutres longitudinales 6 et 7 et deux poutres transversales 8 et 9. De manière conventionnelle, dans la présente description, la partie avant du dispositif correspond à la partie située à gauche de la figure et la partie arrière est définie comme étant la partie située à droite de la figure. Ainsi la poutre transversale 8 sera appelée par la suite la poutre « avant » et la poutre transversale 9, la poutre « arrière » du cadre supérieur 4.

Le bloc chargeur 1 parallélépipédique vient se fixer sur le cadre supérieur 4 par quatre vis 10 passant par quatre orifices 11 situés au voisinage de ses angles et quatre orifices 12 correspondant situés au voisinage des quatre angles du cadre supérieur 4. Trois de ces vis 10 viennent se fixer sur trois éléments de fixation 13, 14, 15 situés sur le cadre inférieur 5, permettant ainsi de fixer le bloc chargeur 1 au cadre supérieur 4 et le cadre supérieur 4 au cadre inférieur 5. La vis restante se fixe, par exemple à l'aide d'un écrou, dans un orifice 12 du cadre supérieur 4 créant ainsi un moyen de fixation du bloc chargeur 1 au cadre supérieur 4. Le cadre supérieur 4 comprend en outre une patte de fixation 16, comportant un orifice 17 et fixé à l'angle entre la poutre longitudinale 6 et la poutre arrière 9 du cadre supérieur 4. Cette patte de fixation 16 vient se fixer à l'aide d'une vis 17a sur un élément de fixation 18 du cadre inférieur 5.

Le cadre inférieur 5 comprend un cadre rectangulaire horizontal 5a comprenant deux poutres longitudinales 19 et 20, une poutre transversale avant 21 et une poutre transversale arrière 22. Le cadre inférieur 5 comprend également un élément de montage 23 rectangulaire, monté perpendiculairement sur la poutre transversale avant 21. L'élément de montage 23 comprend deux montants latéraux 24 et 25 et deux montants longitudinaux 26 et 27.

Le cadre inférieur 5 comprend deux bras de renfort 28 et 29 fixés par une de leurs extrémités, par exemple par soudure, respectivement sur les montants latéraux 24 et 25 de l'élément de montage 23. Le premier bras de renfort 28 est fixé par son autre extrémité sur le moyen de fixation 18 du cadre inférieur 5 et le deuxième bras de renfort 29 est fixé par son autre extrémité sur la poutre longitudinale 20 du cadre horizontal 5a.

Un premier bras de levage 30 est positionné verticalement sur la poutre longitudinale 20 du cadre horizontal 5a. Un deuxième bras de levage 31 est accolé au montant latéral 24 de l'élément de montage 23 formant ainsi une diagonale du cadre inférieur 5 avec le premier bras de levage. Ce deuxième bras est positionné verticalement vers l'extérieur du cadre inférieur 5. Le premier bras de levage 30 se situe aux deux tiers de la poutre longitudinale 20 du cadre 5a et le deuxième bras de levage 31 se situe au voisinage de la poutre longitudinale 20 et de la poutre transversale avant 21 formant ainsi une diagonale avec le premier bras de levage 30. De plus, ces bras de levage 30 et 31 sont situés de part et d'autre du centre de gravité de l'ensemble de propulsion de manière à faciliter la manutention du dispositif.

Le cadre supérieur 4 vient se fixer sur le cadre inférieur 5 par l'intermédiaire des quatre vis 10 et 17a coopérant avec les quatre éléments de fixation 13, 14, 15 et 18 situés sur le cadre inférieur 5.

Le cadre inférieur 5 comprend un premier élément de fixation 13 fixé, par exemple par soudure, sur le premier bras de levage 30, le dit bras de levage 30 étant positionné sur la poutre longitudinale 20 du cadre inférieur 5. Le cadre inférieur 5 comprend un deuxième élément de fixation 14 fixé, par exemple par soudure, sur un montant latéral 25 de l'élément de montage 23 du cadre inférieur 5. Le cadre inférieur 5 comprend un troisième élément de fixation 15 fixé, par exemple par soudure, sur le premier bras de renfort 28 du cadre inférieur 5. Le cadre inférieur 5 comprend un quatrième élément de fixation 18 fixé, par exemple par soudure, sur la poutre longitudinale 19 du cadre horizontal 5a du cadre inférieur 5. Ces éléments de fixation 13, 14, 15 et 18 comprennent des orifices 32 taraudés coopérant avec les vis 10 et 17a pour la fixation du cadre supérieur 4 sur le cadre inférieur 5.

Le cadre inférieur 5 est relié au châssis par un premier moyen de fixation 33 et un deuxième moyen de fixation 34 respectivement fixés sur les poutres transversales avant et arrière 21 et 22 du cadre horizontal 5a. De préférence, ces moyens de fixation comprennent des pièces élastiques, telles que des pièces en caoutchouc, permettant d'éviter la transmission des vibrations de la machine électrique 3 et autres éléments montés dans le dispositif de montage, au châssis.

Le boîtier électronique de puissance 2 parallélépipédique comprend quatre pattes de fixation 35 au voisinage de ses angles permettant de le fixer à quatre des pattes de fixation 36 correspondantes fixées deux par deux à l'intérieur des poutres longitudinales 19 et 20 du cadre horizontal 5a. Quatre vis 37 passent par les orifices 38 des pattes de fixation 35 du boîtier électronique de puissance 2 et par les orifices 39 des pattes de fixation 36 du cadre inférieur 5 et sont serrées à l'aide d'un écrou par exemple permettant de fixer le boîtier électronique de puissance 2 au cadre inférieur 5.

La machine électrique 3 parallélépipédique, schématiquement représentée sur la figure 1, est associée à un réducteur 40. Elle comprend un orifice 41 taraudé de manière à permettre le serrage d'une vis 42. Le cadre inférieur 5 comprend une patte de fixation 43 sur la poutre longitudinale 19 comprenant un orifice 44 correspondant à l'orifice 41 de la machine électrique 3 permettant, par le serrage de la vis 42, de créer un moyen de fixation de la machine électrique 3 sur le cadre inférieur 5. La machine électrique 3 comprend également au moins un élément de fixation 45 complémentaire d'au moins un élément de fixation 46 fixé sous la poutre longitudinal 19 du cadre inférieur 5 représentant un autre moyen de fixation de la machine électrique 3 sur le cadre inférieur 5. D'autres moyens de fixation, non représentés sur la figure 1, permettent d'achever la fixation de la machine électrique 3 sur le cadre inférieur 5.

Sur le cadre inférieur 5 peuvent être aisément fixés toute sorte d'éléments auxiliaires tels que le compresseur, la pompe à vide ou encore la pompe à eau, ainsi que d'autres éléments comme des organes de fixation des poutres, non représentés sur la figure 1, qui restent solidarisés du châssis par l'intermédiaire du cadre inférieur 5.

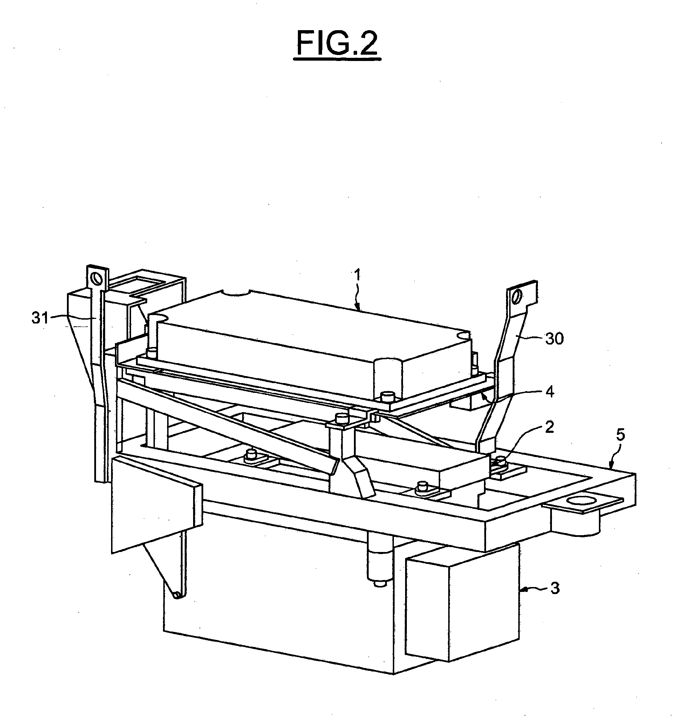

La figure 2, sur laquelle les éléments identiques à ceux de la figure 1 portent les mêmes références, est une représentation du dispositif précédemment décrit lorsque l'ensemble de propulsion comprenant le bloc chargeur 1, le boîtier électronique de puissance 2 et la machine électrique sont assemblés avec l'organe de montage comprenant le cadre supérieur 4 et le cadre inférieur 5. Le bloc chargeur 1 est fixé sur la partie supérieure du cadre supérieur 4. Le boîtier électronique de puissance 2 est fixé sur le cadre inférieur 5 et la plus grande partie de ce boîtier électronique de puissance 2 se trouve sous le cadre inférieur 5. La machine électrique 3 est quant à elle fixée au cadre inférieur 5 par-dessous.

Par l'intermédiaire des deux bras de levage 30 et 31 positionnés équilibrés par rapport au centre de gravité de l'ensemble de propulsion et de l'organe de montage assemblés, l'ensemble de tous ces éléments peut être assemblé à un endroit puis aisément transporté dans un autre endroit en vue du montage dans le compartiment moteur d'un véhicule automobile.

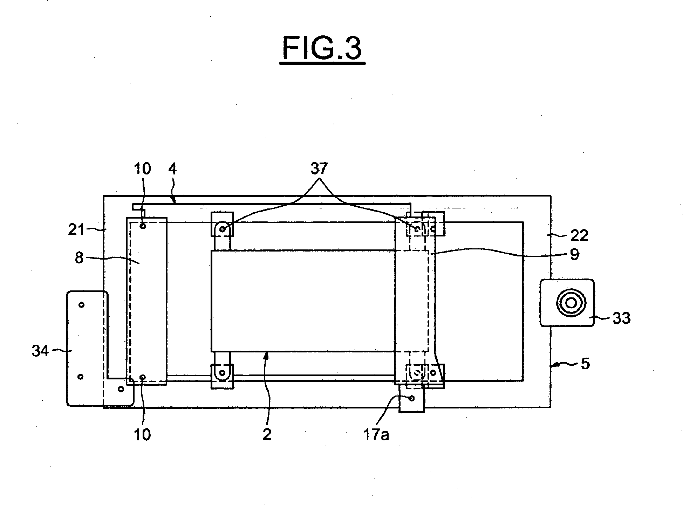

La figure 3, sur laquelle les éléments identiques à ceux de la figure 1 portent les mêmes références, est une vue de dessus du dispositif conforme à l'invention en cours d'assemblage. Le cadre supérieur 4 est déjà fixé sur le cadre inférieur 5 par les vis 10 et 17a et le cadre inférieur 5 est ici déjà fixé au châssis du véhicule par l'intermédiaire des moyens de fixation 33 et 34. Le boîtier électronique de puissance 2 est déjà fixé sur le cadre inférieur 5 par l'intermédiaire des vis 37.

L'organe de montage du dispositif comprend deux cadres distincts, un cadre inférieur 5 et un cadre supérieur 4, afin de pallier le manque d'espace dans le compartiment moteur, ce qui conduit à recentrer les poutres avant et arrière 8 et 9 du cadre supérieur 4. Ainsi, la poutre avant 8 du cadre supérieur 4 est accolée à la poutre avant 21 du cadre inférieur 5 et la poutre arrière 9 du cadre supérieur 4 est située à distance de la poutre arrière 22 du cadre inférieur 5, occultant l'accès aux vis de fixation 37 arrière du boîtier électronique de puissance au cadre inférieur 5. Lorsque le cadre supérieur 4 n'est pas démonté, l'accès à la vis de fixation 37 arrière du boîtier électronique de puissance 2 est masqué. Or l'importance du poids du boîtier électronique de puissance nécessite, pour le montage et le démontage, un déplacement vers le haut. Ceci est rendu possible uniquement lorsque le cadre supérieur 4 est démonté.

On va maintenant décrire les différentes étapes du montage d'un ensemble de propulsion électrique sur l'organe de montage précédemment décrit en se référant aux figures 1 et 3. On commence par fixer le cadre inférieur 5 sur la machine électrique 3, on fixe ensuite le bloc électronique de puissance 2 sur le cadre inférieur 5, on fixe le cadre supérieur 4 sur le cadre inférieur 5, enfin on fixe le bloc chargeur au cadre supérieur 4.

Il est aussi possible de commencer par fixer le bloc chargeur au cadre supérieur 4, puis fixer le boîtier électronique de puissance 2 au cadre inférieur 5. On fixe alors le cadre supérieur 4 au cadre inférieur 5 et la machine électrique au cadre inférieur 5. Le cadre inférieur 5 est ensuite fixé au châssis du véhicule automobile.

Lorsque l'ensemble est monté, tel que représenté sur la figure 2, on peut le manutentionner et le positionner, en le supportant à l'aide des deux bras de levage 30 et 31 afin de le descendre à l'intérieur du compartiment moteur du véhicule et le fixer au châssis du véhicule par l'intermédiaire du cadre inférieur 5.

On peut ainsi démonter facilement et individuellement, pour entretien ou réparation par exemple, le bloc chargeur 1 et le boîtier électronique de puissance 2. Il est de plus possible de démonter ou d'avoir accès au bloc chargeur 1, au boîtier électronique de puissance 2 et à la machine électrique en enlevant uniquement le cadre supérieur 4 sans avoir à démonter le cadre inférieur 5. Ainsi les éléments auxiliaires, tels que le compresseur, la pompe à vide, la pompe à eau, peuvent rester en place dans le compartiment moteur du véhicule lors du démontage de l'ensemble du moteur électrique.

Il est à noter que si les contraintes d'architecture du compartiment moteur le permettent, un organe de montage ne comprenant qu'une seule partie pourrait être utilisé au lieu de deux cadres inférieur et supérieur séparés.

De plus, les cadres du dispositif de montage sont de préférence réalisés en acier mécano-soudé, ce qui a pour avantage de rendre le dispositif de montage plus résistant aux chocs : en effet lors d'un choc, le dispositif de montage se déformera sans se rompre. Il est d'ailleurs à noter que la disposition des éléments de propulsion dans ce dispositif de montage, lequel permet de fixer également des protecteurs de connecteurs ou câbles, rend ces éléments de propulsion moins vulnérables aux chocs que s'ils étaient fixés de façon usuelle dans des compartiments plus directement fixés au châssis.

## Revendications

1. Dispositif de montage d'un ensemble de propulsion électrique dans le compartiment moteur d'un véhicule électrique, comprenant un organe de montage présentant des moyens de fixation élastiques sur le châssis du véhicule et des moyens de fixation pour une machine électrique (3), un bloc électronique de puissance (2) et un bloc chargeur (1), l'organe de montage comprenant un module de maintien inférieur (5) muni d'un moyen de fixation au châssis (33 ;34), d'un moyen de fixation de la machine électrique (3) et d'un moyen de fixation du bloc électronique de puissance (2), et un module de maintien supérieur (4) muni d'un moyen de fixation du bloc chargeur (1) et adapté pour se fixer sur le module de maintien inférieur (5), **caractérisé en ce que** ledit module de maintien inférieur (5) comprend des bras de levage (30 ;31) disposés de part et d'autre de son centre de gravité.

2. Dispositif de montage selon la revendication 1, **caractérisé en ce que** le module de maintien inférieur (5) comprend deux poutres transversales (21 ;22) sur lesquelles deux moyens de fixation permettent de fixer une première poutre (8) du module de maintien supérieur sensiblement accolée à une première poutre transversale (21) du module inférieur (5) et une deuxième poutre (9) du module de maintien supérieur (4) située à distance d'une deuxième poutre transversale (22) du module de maintien inférieur (5).

3. Dispositif de montage selon l'une quelconque des revendications précédentes, **caractérisé en ce qu'**il comprend des moyens de fixation aptes à fixer les éléments auxiliaires du moteur, tels qu'un compresseur ou une pompe à eau, au module de maintien inférieur (5).

4. Ensemble de propulsion électrique, destiné à être monté dans le compartiment moteur d'un véhicule électrique, comprenant une machine électrique (3), un bloc électronique de puissance (2) et un bloc chargeur (1), comportant un organe de montage présentant des moyens de fixation sur le châssis du véhicule et des moyens de fixation pour la machine électrique (3), le bloc électronique de puissance (2) et le bloc chargeur (1), **caractérisé en ce que** l'organe de montage comprend un module de maintien inférieur (5) comportant des bras de levage (30 ;31) disposés de part et d'autre de son centre de gravité.

5. Ensemble de propulsion électrique selon la revendication 4, **caractérisé en ce que** le module de maintien inférieur (5) est muni d'un moyen de fixation au châssis (33 ;34), d'un moyen de fixation de la machine électrique (3) et d'un moyen de fixation du bloc électronique de puissance (2), et **en ce que** l'organe de montage comprend un module de maintien supérieur (4) muni d'un moyen de fixation du bloc chargeur (1) et adapté pour se fixer sur le module de maintien inférieur (5).

6. Procédé de montage d'un ensemble de propulsion électrique dans le compartiment moteur d'un véhicule électrique, ce procédé comprenant les étapes suivantes : on fixe une machine électrique (3) sur la partie inférieure d'un module de maintien inférieur (5), on fixe un bloc électronique de puissance (2) sur la partie supérieure du module de maintien inférieur (5), on fixe un bloc chargeur (1) sur un module de maintien supérieur (4), on fixe le module de maintien supérieur (4) sur le module de maintien inférieur (5), et on loge l'ensemble à l'intérieur du compartiment moteur.

7. Procédé de montage selon la revendication 6, **caractérisé en ce qu'**on fixe le module de maintien inférieur (5) au châssis du véhicule.

8. Procédé de montage selon l'une quelconque des revendications 6 et 7, **caractérisé en ce qu'**on fixe des éléments auxiliaires du moteur, tels qu'un compresseur ou une pompe à eau, au module de maintien inférieur (5).

## Patentansprüche

1. Vorrichtung für die Montage einer elektrischen Antriebsanordnung im Motorraum eines Elektrofahrzeugs, die ein Montageorgan, das elastische Mittel für die Befestigung am Rahmen des Fahrzeugs und Mittel für die Befestigung einer elektrischen Maschine (3) aufweist, einen elektronischen Leistungsblock (2) und einen Ladeeinrichtungsblock (1) enthält, wobei das Montageorgan ein unteres Haltemodul (5), das mit einem Mittel für die Befestigung am Rahmen (33; 34), einem Mittel für die Befestigung der elektrischen Maschine (3) und mit einem Mittel für die Befestigung eines elektronischen Leistungsblocks (2) versehen ist, und ein oberes Haltemodul (4), das mit einem Mittel für die Befestigung des Ladeeinrichtungsblocks (1) versehen ist und dafür ausgelegt ist, am unteren Haltemodul (5) befestigt zu werden, umfasst, **dadurch gekennzeichnet, dass** das untere Haltemodul (5) Hubarme (30; 31) umfasst, die beiderseits seines Schwerpunkts angeordnet sind.

2. Montagevorrichtung nach Anspruch 1, **dadurch gekennzeichnet, dass** das untere Haltemodul (5) zwei Querträger (21; 22) umfasst, auf denen zwei Befestigungsmittel das Befestigen eines ersten Trägers (8) des oberen Haltemoduls im Wesentlichen angefügt an einen ersten Querträger (21) des unteren Moduls (5) und eines zweiten Trägers (9) des oberen Haltemoduls (4), der sich in einem Abstand von einem zweiten Querträger (22) des unteren Haltemoduls (5) befindet, ermöglichen.

3. Montagevorrichtung nach einem der vorhergehenden Ansprüche, **dadurch gekennzeichnet, dass** sie Befestigungsmittel umfasst, die dafür ausgelegt sind, die Hilfselemente des Motors wie etwa einen Kompressor oder eine Wasserpumpe an dem unteren Haltemodul (5) zu befestigen.

4. Elektrische Antriebsanordnung, die dazu bestimmt ist, im Motorraum eines Elektrofahrzeugs montiert zu werden, die eine elektrische Maschine (3), einen elektronischen Leistungsblock (2) und einen Ladeeinrichtungsblock (1) enthält, mit einem Montageorgan, das Mittel für die Befestigung am Rahmen des Fahrzeugs und Mittel für die Befestigung der elektrischen Maschine (3), des elektronischen Leistungsblocks (2) und des Ladeeinrichtungsblocks (1) aufweist, **dadurch gekennzeichnet, dass** das Montageorgan ein unteres Haltemodul (5) umfasst, das Hubarme (30; 31) aufweist, die beiderseits seines Schwerpunkts angeordnet sind.

5. Elektronische Antriebsanordnung nach Anspruch 4, **dadurch gekennzeichnet, dass** das untere Haltemodul (5) mit einem Mittel für die Befestigung am Rahmen (33; 34), einem Mittel für die Befestigung der elektrischen Maschine (3) und einem Mittel für die Befestigung des elektronischen Leistungsblocks (2) versehen ist, und dass das Montageorgan ein oberes Haltemodul (4) umfasst, das mit einem Mittel für die Befestigung des Ladeeinrichtungsblocks (1) versehen ist und dafür ausgelegt ist, am unteren Haltemodul (5) befestigt zu werden.

6. Verfahren für die Montage einer elektrischen Antriebsanordnung im Motorraum eines Elektrofahrzeugs, wobei das Verfahren die folgenden Schritte umfasst: Befestigen einer elektrischen Maschine (3) am unteren Teil eines unteren Haltemoduls (5), Befestigen eines elektronischen Leistungsblocks (2) am oberen Teil des unteren Haltemoduls (5), Befestigen eines Ladeeinrichtungsblocks (1) an einem oberen Haltemodul (4), Befestigen des oberen Haltemoduls (4) am unteren Haltemodul (5) und Einsetzen der Anordnung in den Motorraum.

7. Montageverfahren nach Anspruch 6, **dadurch gekennzeichnet, dass** das untere Haltemodul (5) am Rahmen des Fahrzeugs befestigt wird.

8. Montageverfahren nach einem der Ansprüche 6 und 7, **dadurch gekennzeichnet, dass** Hilfselemente des Motors wie etwa ein Kompressor und eine Wasserpumpe am unteren Haltemodul (5) befestigt werden.

## Claims

1. Device for mounting an electric propulsion assembly in the engine compartment of an electric vehicle, comprising a mounting member having elastic fastening means on the chassis of the vehicle and fastening means for an electric machine (3), an electronic power block (2) and a charger block (1), the mounting member comprising a bottom securing module (5) provided with a means for fastening to the chassis (33; 34), a means for fastening the electric machine (3) and a means for fastening the electronic power block (2), and a top securing module (4) provided with a means for fastening the charger block (1) and designed to be fastened onto the bottom securing module (5) **characterized in that** said bottom securing module (5) comprises lifting arms (30; 31) arranged on either side of its centre of gravity.

2. Mounting device according to Claim 1, **characterized in that** the bottom securing module (5) comprises two transversal beams (21; 22) on which two fastening means enable a first beam (8) of the top securing module to be fastened substantially attached to a first transversal beam (21) of the bottom module (5) and a second beam (9) of the top securing module (4) situated at a distance from a second transversal beam (22) of the bottom securing module (5).

3. Mounting device according to either of the preceding claims, **characterized in that** it comprises fastening means suitable for fastening the auxiliary elements of the engine, such as a compressor or a water pump, to the bottom securing module (5).

4. Electric propulsion assembly, intended to be mounted in the engine compartment of an electric vehicle, comprising an electric machine (3), an electronic power block (2) and a charger block (1), comprising a mounting member having fastening means on the chassis of the vehicle and fastening means for the electric machine (3), the electronic power block (2) and the charger block (1) **characterized in that** the mounting member comprises a bottom securing module (5) comprising lifting arms (30; 31) arranged on either side of its centre of gravity.

5. Electric propulsion assembly according to Claim 4, **characterized in that** the bottom securing module (5) is provided with a means for fastening to the chassis (33; 34), a means for fastening the electric machine (3) and a means for fastening the electronic power block (2), and **in that** the mounting member comprises a top securing module (4), provided with a means for fastening the charger block (1) and designed to be fastened on the bottom securing module (5).

6. Method for mounting an electric propulsion assembly in the engine compartment of an electric vehicle, said method comprising the following steps: an electric machine (3) is fastened onto the bottom portion of a bottom securing module (5), an electronic power block (2) is fastened onto the top portion of the bottom securing module (5), a charger block (1) is fastened onto a top securing module (4), the top securing module (4) is fastened onto the bottom securing module (5), and the assembly is housed inside the engine compartment.

7. Mounting method according to Claim 6, **characterized in that** the bottom securing module (5) is fastened to the chassis of the vehicle.

8. Mounting method according to either of Claims 6 and 7, **characterized in that** auxiliary elements of the engine, such as a compressor or a water pump, are fastened to the bottom securing module (5).
